Europäisches Patentamt

European Patent Office

Office européen des brevets

(19)

(11) Publication number: **0 469 585 B1**

# EUROPEAN PATENT SPECIFICATION

(45) Date of publication of patent specification: **30.11.94**

(51) Int. Cl.5: **C02F 1/34**, C12G 1/06, A23L 3/00, A23L 1/00

(21) Application number: **91112889.0**

(22) Date of filing: **31.07.91**

(54) **Method of improving the quality of drinking water or liquid brewed foods or promoting brewage.**

(30) Priority: **31.07.90 JP 203590/90**
       **28.09.90 JP 258960/90**

(43) Date of publication of application:
     **05.02.92 Bulletin  92/06**

(45) Publication of the grant of the patent:
     **30.11.94 Bulletin  94/48**

(84) Designated Contracting States:
     **AT BE CH DE DK ES FR GB GR IT LI LU NL SE**

(56) References cited:
     **FR-A- 1 102 472**
     **US-A- 3 233 964**
     **US-A- 3 480 529**
     **US-A- 3 619 203**

     **DATABASE WPI, accession nr. 80-58432C**
     **[33] Derwent Publications Ltd.,**

     **DATABASE WPIL, accession nr. 83-732924**
     **[32] Derwent Publications Ltd.,**

(73) Proprietor: **BODYSONIC KABUSHIKI KAISHA**
     **1-19-3, Kamiochiai**
     **Shinjuku-ku, Tokyo (JP)**

(72) Inventor: **Komatsu, Akira**
     **c/o BODYSONIC KABUSHIKI KAISHA,**
     **1-19-3, Kamiochiai**
     **Shinjuku-ku, Tokyo (JP)**
     Inventor: **Fujihara, Toshio**
     **c/o K.K. Nus Art Creation,**
     **673 Nakakogahara**
     **Kofu-shi, Yamanashi-ken (JP)**

(74) Representative: **Füchsle, Klaus, Dipl.-Ing. et al**
     **Hoffmann, Eitle & Partner,**
     **Patentanwälte,**
     **Postfach 81 04 20**
     **D-81904 München (DE)**

EP 0 469 585 B1

BIOCHEMISCHE ZEITSCHRIFT, Vol.324, No.1, 1953 Springer-Verlag, Heidelberg(DE) H. FINK et al.: frequentem Schall auf die alkoholische Gärung. page 36 -

DATABASE WPI, accession nr. 80-45676 [26] Derwent Publications Ltd., GB& PATENTAB-STRACTS OF JAPAN vol. 004, no. 101 (C-019)19 July 1980& JP-A-55 064 835 ( KOBAYASHI SHINKICHI ) 15 May 1980

## Description

## BACKGROUND OF THE INVENTION

### Field of the Invention

The present invention relates to a method of improving the quality of water or liquid brewed foods (hereinafter called "liquid foods") for enhancing the taste of drinking water or a liquid food when the method is applied in the course of the production of drinking water or such liquid brewed foods as liquor and soy sauce or at the time of the storage of a liquid food after its production.

### Description of Prior Art

A drinking water storage tank on a ship stores drinking water and cooking water for a period of several months. The water thus stored on a ship will not be corrupted in the course of a voyage of the ship. Also, with regard to liquor, it has been said since a long time ago that the liquor carried aboard a ship is tasty. As a reason for the former, it is conceivable that constantly exerted vibrations give activity to the molecules of the water, and, as regards the latter, it has been ascertained by experiments that adequate vibrations given to a liquor will improve its taste even though the reason for such an improvement may not have been academically established yet. As for the manner how vibrations are exerted, various ways can be conceived. For example, a liquor bottle can be shaken by hand, or vibrations can be applied to liquor as loaded on a running motor vehicle, or else vibrations can be given to a liquor bottle or a tank with a shaker designed to work with ultrasonic waves.

Now, an inquiry is made into the reasons why vibrations given to liquor cause improvements on its taste. A first conceivable reason is that the taste of water, which occupies a predominantly large portion of the liquor, is thereby improved. When vibrations are applied to water, the cluster of water (which is a combination of water molecules) will be made smaller, so that the movement of the molecules becomes active, the molecules of the water being thereby activated and the taste of the water being accordingly improved. People say that city service water has a poor taste, and this is due to the fact that the cluster of molecules in the water is large. It is observed that the reason for the large cluster size is attributable to calcium ions. The calcium ions contained in the water will decrease in the process of filtration and sterilization of water. On the contrary, the types of water appreciated as being tasty generally contain more of calcium ions and magnesium ions. This is due to the fact that the cluster of molecules is broken up in the presence of calcium ions, so that the molecules of water surround the ions. As the result, the cluster of water molecules becomes smaller.

In the meanwhile, the relationship between vibrations and the taste of liquor is considered below. Liquor is formed by the mixing and combining of the molecules of ethyl alcohol (hereinafter called "ethanol") with the molecules of water. Namely, it is considered that a liquor giving a well-rounded taste is produced when the ingredient of ethanol obtained from grains or fruits and mixed into water of good quality attains progress in maturation as the molecules of ethanol get into the void holes in the cluster, which is a combined body (lump) of the molecules of water. This process can be considered to be the same also with respect to such non-liquor foods as soy sauce, and an enhancement of the taste of the food is attained as the molecules of the basic ingredient of the particular food get into the void holes in the cluster of water.

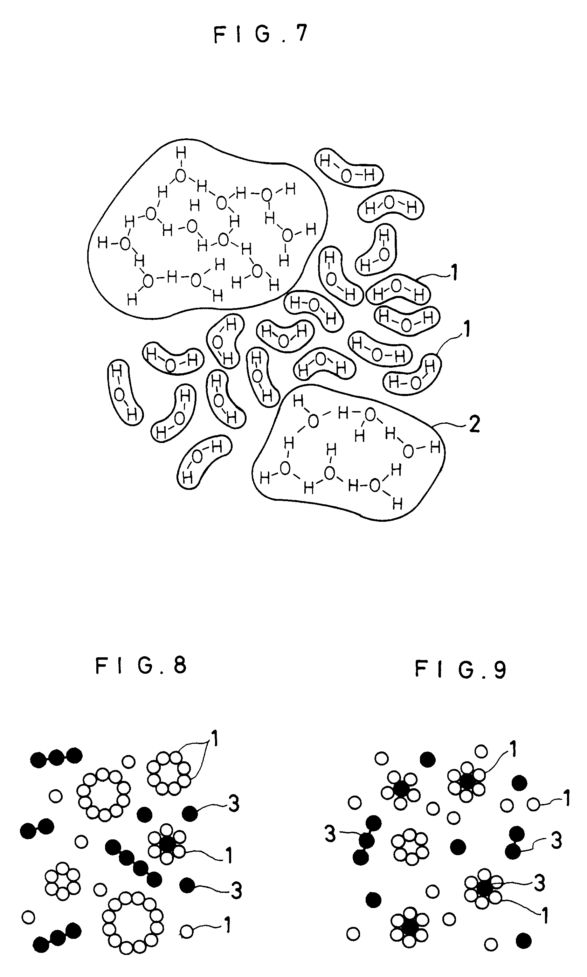

Now, a description is made of the mechanism according to the present invention with reference to the accompanying drawings. Fig. 7 illustrates the dynamic structure of water. Water, $H_2O$, which has the molecular structure composed of hydrogen combined with oxygen, has molecules in the state as indicated by the reference mark 1, in case it is in its liquid phase, so that it is considered that the molecules of water are not present in isolated single molecules, but assume a dynamic structure in which several water molecules 1 are formed into a cluster 2 by the force of a hydrogen bond at work among the molecules. However, the structure of water like this is undergoing constant changes.

Fig. 8 and Fig. 9 illustrate a state in which three ethanol molecules are present as mixed in the water molecule 1 in the structure described above, and, of these, Fig. 8 shows the state of a freshly brewed liquor while Fig. 9 shows the state of a matured liquor. As it is clearly seen in Fig. 8, most of the water molecules 1 and the ethanol molecules 3 are isolated in the case of the freshly brewed liquor, but the matured liquor shown in Fig. 9 contains an extremely large number of ethanol molecules 3 which have entered into the void holes in the cluster 2 of the water molecules 1. The water molecules 1, which are shown as surrounding the ethanol molecules 3 in Fig. 9, are put together in a large number to form the cluster 2 illustrated in Fig. 7, and, accordingly, the ethanol molecules 3 intrude into the inside of this cluster 2 and

3

are accommodated therein.

In order that the ethanol molecules 3 may intrude into the void holes of the cluster 2 of water, it is effective, as described above, that a container which contains a mixture of water and ethanol is shaken either continuously or periodically in the course of brewing. This effect, moreover, is recognizable also in the case where vibrations are given to the liquor in the process of maturing after the brewing process. It can be regarded that the restacking of barrels, which is done at periodic intervals at whiskey distilleries, is for the same reason. Then, the question is in what manner the vibrations should be given. The magnitude of vibrations is ascertained also through experiments with ultrasonic waves, and it has been found that small vibrations will achieve a sufficient effect.

A method for improving the quality of wine by subjecting the wine bottles to a vibration of about 3000 cycles/min. is known from US-A-3 619 203.

The problem which is found when vibrations are given to the container with an ultrasonic oscillator is as described in the following part. Namely, when an ultrasonic oscillator is used as a vibration source, the generated vibrations are always constant both in frequency and amplitude, with no change at all in relation to the elapse of time. In case there is not any change either in frequency or in amplitude, the oscillator is to be fixed at such a frequency and in such an amplitude for the vibration as will attain the most remarkable effect on the object to which it is applied, but the oscillator, if fixed in this manner, will not be capable of generating weaker vibrations even at a time when it is desirable to reduce the intensity of vibrations at a stage in the progress of brewing.

Here, a description is made of the differences between the output signal from an ultrasonic wave oscillator and the signal generated from music used as its source. The output from the ultrasonic wave oscillator is a continuous wave without any change in it. On the other hand, the output generated from music often has the characteristics of "the 1/f fluctuation", which is a pleasant fluctuation with moderate changes and correlation. "The 1/f fluctuation" refers to the phenomenon of the fluctuations of the measured value centering around a mean value when various physical quantities are measured in physics. For human beings, "the 1/f fluctuation" is known as a pleasant stimulus with high affinity. A stimulus without any change in it tends to produce a weaker and weaker stimulative effect along with the passage of time. On the other hand, a stimulus which has accompanying appropriate changes can maintain its stimulative effect. It is known that "the 1/f fluctuation" is at work at the level of cells and also at the level of water molecules, and, generally speaking, "the 1/f fluctuation" is found to be present in all the pacifying items existing in nature and can therefore be considered to be a phenomenon with a high degree of affinity to human beings. There is a scientific ground in support of the use of music having the characteristics of the "1/f fluctuation" as a vibrating stimulus applied to the water molecules and yeast.

The present invention has been made in view of the fact that an oscillator using ultrasonic waves or an oscillator which works with another mechanical construction but produces similar results as the above is not capable of arbitrarily changing the frequency and the amplitude as described above and is therefore not capable of necessarily achieving favorable results towards the improvement of the quality of liquid foods. Thus, the object of the present invention is to offer a method of improving the quality of liquid foods by using, as vibration sources, such signals formed in music as can be generated with arbitrary changes in their frequency and their amplitude.

## SUMMARY OF THE INVENTION

As a means of overcoming the problems described above, the present invention has established a method of improving the quality of water by such means as are characterized by being made in the form of an electro-mechanical vibration transducer 7 mounted on a container such as a tank which is filled up with water, provided that the particular liquid food is water, or being arranged with a container such as a bottle containing water placed on a shelf or a mounting base on which an electro-mechanical vibration transducer 7 is installed, and, while the means just described is maintained in this state, a signal current (a music signal current; the same definition applying to any of this term as used hereinafter) is being fed to the electro-mechanical vibration transducer 7 mentioned above. Moreover, in case the particular liquid food is a brewed food, such as a liquor or a soy sauce, the present invention offers a method which improves the quality of brewed foods by such a means as is characterized by being comprised of an electro-mechanical vibration transducer 7 mounted on the outer wall of a tank used in the brewing process for the food (namely, a fermentation tank 4), with a signal current being fed to the above-mentioned electro-mechanical vibration transducer 7 in the course of the brewing process for the brewed food mentioned above. Furthermore, in case the liquid food is made by brewing and filled in a container, such as a bottle (for example, whiskey filled in a bottle), the present invention offers a method of improving the quality of liquid

4

foods, the method being characterized by providing a shelf or a mount base, where such bottled liquid foods can be placed, with an electro-mechanical vibration transducer being mounted on a part of such a shelf or such a mount base, and feeding a signal current to the above-mentioned electro-mechanical vibration transducer 7 in the state where the above-mentioned container is placed on the above-mentioned shelf or on the above-mentioned mount base.

Thus, the method according to the present invention promotes the activation of the molecules of water by musical vibrations which are generated with changes made thereof by the electro-mechanical vibration transducer 7 in the state of being contained in such a container or in the process of being matured as filled up in such a container, either in the case of water itself or in the case of any liquor, soy sauce, or the like, in which water occupies a major portion of the total components. This quality-improving process not only makes improvements on the taste of water, but also improves the health of those persons who have drunk the water in the improved quality. Additionally, this process promotes the entry of the ethanol component into the void holes in the cluster of water. Therefore, the brewed foods processed by this method will attain further improvements on their quality (i.e. taste). In this case, then, the use of musical signals as source signal makes it possible to cause the vibrations to undergo changes in accordance with predetermined rhythm and melody and accordingly to make an appropriate selection of the type of music thereby to make improvements on the taste and to promote the progress of brewing in a manner most suitable for the object to which the method is applied.

## BRIEF DESCRIPTION OF THE DRAWINGS

Fig. 1 presents a side view of a tank for brewing wine or the like to which the method according to the present invention is to be actually applied;

Fig. 2 presents a bottom view of the tank shown in Fig. 1;

Fig. 3 presents a sectional view of an electro-mechanical vibration transducer to which the method according to the present invention is applied;

Fig. 4 presents a plane view illustrating the vibration transducer;

Fig. 5 presents a bottom view showing the vibration transducer;

Fig. 6 presents a perspective view illustrating the vibration transducer according to the present invention as applied to a water feeding tank for a building;

Fig. 7 presents a dynamic structural diagram for the molecules of water; and

Fig. 8 and Fig. 9 present charts respectively showing the state in which ethanol molecules are present in mixture with the molecules of water shown in Fig. 7; Of these charts, Fig. 8 illustrates the state of Japanese sake prior to its maturation while Fig. 9 illustrates the state of matured sake.

## DETAILED DESCRIPTION OF THE INVENTION

### Example of Preferred Embodiment of the Invention

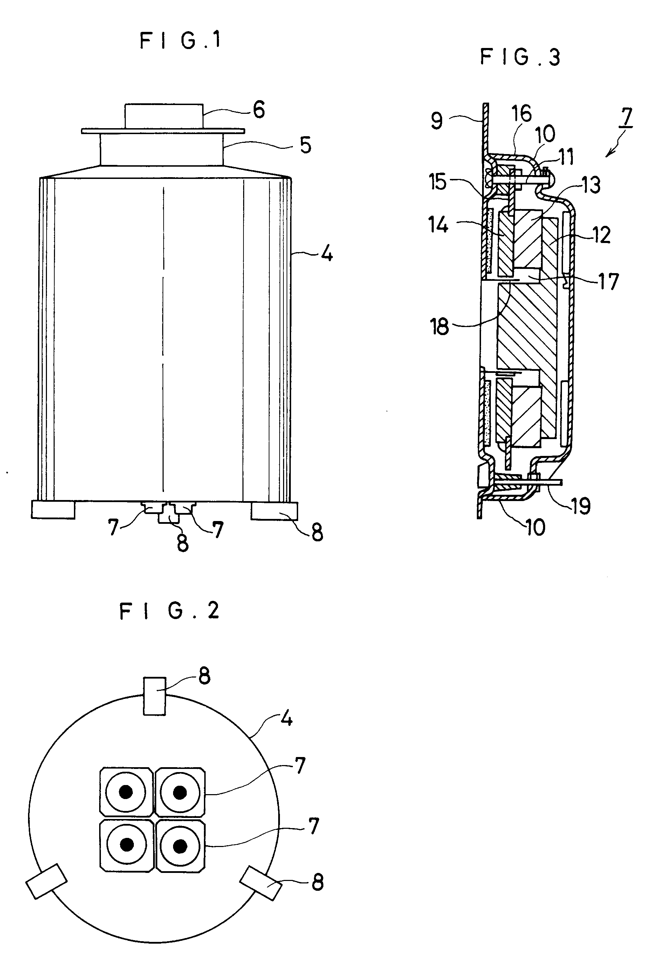

Now, a detailed description will now be made of the construction of the apparatus to be used in the embodiment of the method according to the present invention as illustrated in the accompanying drawings. In Fig. 1, the reference number 4 indicates a fermentation tank, which measures approximately 800 mm in its height and approximately 600 mm in its diameter. The reference number 5 indicates a feeding and delivery port for grapes, and the reference number 6 indicates a lid for the port. On the bottom part of this fermentation tank 4, four electro-mechanical vibration transducers 7 are installed as shown in Fig. 2. The reference number 8 indicates a leg of the fermentation tank 4. This electro-mechanical vibration transducer 7 has been developed by the present inventor, and, for use thereof as an apparatus for vibrating a human body placing article, such as a chair, in tune with music, an application for a patent has already been filed and a patent has already been issued for the application (Refer to the Official Gazette on the Japanese Patent                ).

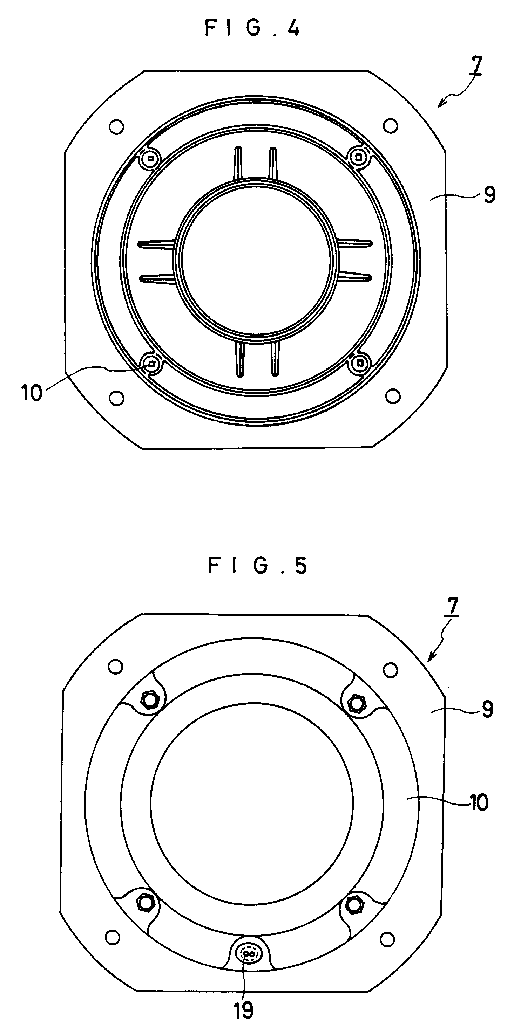

The electro-mechanical vibration transducer 7 has such an internal construction as is illustrated in Fig. 3 and has such a bottom area shape as shown in Fig. 4 and such a plane shape as shown in Fig. 5. In these drawings, the reference number 9 indicates a base plate the outer circumference of which is formed into a flange, and the reference number 10 indicates a cover. As shown in Fig. 3, the cover 10 is fixed by a bolt 11 on the base plate 9. Then, in the inside of the main unit of the case constructed with these, the structure described below is accommodated, and an electro-mechanical vibration transducer 7 is thereby formed.

In Fig. 3, the reference number 13 indicates a yoke, which has a section in the shape of the letter T, as shown in the drawing. A ring-shaped magnet 13 is fitted to the outer circumferential area of the yoke 12, on the outer side of which a top plate 14 is provided, and these are supported with the bolt 11 mentioned above by way of a ring spring 15, which works as a damper. The reference number 16 indicates a spacer. With the construction described above, a magnetic gap 17 is formed between the inner circumference of the top plate 14, which has one surface thereof held in contact with the magnet 13, and the protruding part of the yoke 12. In the inside of this gap 17 is provided a coil 18, to which a low frequency current through a cord 19 from an acoustic equipment not shown in the drawing.

The electro-mechanical vibration transducer 7 constructed in this manner realizes the method according to the present invention when a musical signal is fed to the vibration transducer 7 as it is mounted on the fermentation tank 4. That is to say, when the coil 18 receives a low frequency current from an acoustic equipment not shown in the drawing, the integrated structure comprised of the yoke 12, the magnet 13, and the top plate 14 will vibrate in relation to the coil 18 by the effect of a magnetic interference between the coil 18 and the magnet 13. Thereby, the fermentation tank 4 which is provided with this electro-mechanical vibration transducer 7 mounted on the part of the flange thereof is vibrated, so that the ethanol molecule 3, as a part of the liquid contained in the inside of the fermentation tank 4, will be readier to get into the void holes in the water cluster 2. By the effect of the ethanol molecules 3 thus getting into void holes of the water cluster 2, the brewed food contained in the fermentation tank 4 will develop an improved taste.

The example of preferred embodiment given above relates to the process of brewing a wine, and yet the same concept is applicable also to the processing of any liquor other than wine or such a brewed food as soy sauce. Also in the case of water, it is possible to improve its taste by the use of a tank similar to the fermentation tank 4.

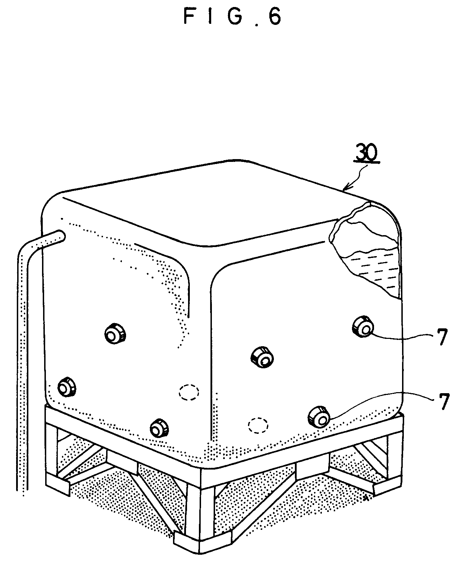

Next, the example of preferred embodiment shown in Fig. 6 shows electro-mechanical vibration transducers 7 installed on a water feeding tank 30 for a building.

With this setup, the water feeding tank 30 thus provided with the electro-mechanical vibration transducers 7 will vibrate, so that the water filled inside the tank will vibrate accordingly. These vibrations will make the molecules of water smaller, so that the density of water will be increased, and consequently the air which has entered into the space among the molecules will be thereby reduced. This operation not only achieve a considerable improvement on the taste of the water, but also attains an improvement on the health of a person who has drunk the water owing to enhanced interactions between the intestinal bifidus fungus and the enzymes inside the person's body.

The low frequency current to be applied to the electro-mechanical vibration transducer 7 should be so modified as to transmit vibrations to water with high efficiency through an appropriate adjustment thereof to attain the optimum suitability to the size and shape of each particular water feeding tank through modifications made as appropriate of the size or phase of the electro-mechanical vibration transducers 7 which are installed on the corresponding position of the water feeding tank.

Next, a description is now made of those methods according to the present invention whereby vibrations are exerted to water or a brewed food after it is filled in a container. For containers in this case, where the content is water, it may be regarded that the smallest of them is a bottle. For such bottles, a shelf or a mount base for placing them thereon is set up, and the electro-mechanical vibration transducer shown in Fig. 2 is to be installed on a lower part of such a shelf or such a mount base, and a low frequency current in music is conducted to the vibration transducer. Then, as the vibrations thus generated are transmitted to the bottle via the shelf or the mount base, the water or liquor inside the bottle will be vibrated. These vibrations thus transmitted to water, as the case may be, reduce the molecules of water and increase the density of water, so that the amount of the air which has got into the space among the molecules of water is thereby reduced. This achieves a considerable improvement on the taste of the water and additionally attains an improvement on the health of a person who has drunk the water, as the interactions between the intestinal bifidus and the enzymes become more active in the person's body. On the other hand, in case the content of such a bottle is liquor, the molecules of water become smaller, the air being thereby purged, with the result that the activities of the anaerobic yeast fungus become more vigorous and that progress is thereby attained in the maturation of the liquor.

In the examples of preferred embodiments given above, an electro-mechanical vibration transducer 7 which has an internal structure as shown in Fig. 3 and an external structure as shown in Fig. 4 and Fig. 5 is used. However, the present invention is not to be limited to this form of embodiment, but may be embodied with a vibration transducer in a different construction. In essence, any vibration transducer will be acceptable, so long as it is capable of generating vibrations corresponding to those signals, such as musical signals, which undergo constant changes in their frequency and amplitude. Moreover, a description has been made of wine as an example of a brewed food, but the present invention is not limited to this form of embodiment. This invention is capable of producing favorable results when it is embodied with respect to another type of liquor and to such other brewed foods as soy sauce.

6

**Examples of Experiments**

**(1) Experiment on Brewing of Wine with Musical Vibrations Applied to It**

At the wine center of Yamanashi Prefecture Industrial Technology Center, a comparative experiments was conducted on fermentation, with two units of 200-liter fermentation tanks being used for the experimentation, one of these tanks being provided with a transducer which furnishes musical vibrations to the wine in the tank and the other of these tanks being used without any transducer mounted thereon. The piece of music used for this experiment is "Wine's Lullaby", which is wine brewing music composed by Mr. Toshio Fujihara.

**(2) Conditions for Experimentation**

1. Experimental fermentation tank
   200 liters in content capacity 600 mm D x 780 H (The same dimensions for the tank to which the musical vibrations are applied and for the tank to which the musical vibrations are not applied)
2. Raw material grape
   Koshu strain 200 kg (approximately 150 liters)
3. Fermentation period
   12 days
4. Yeast used
   t/n (W-3)
5. Transducer Used
   SC-80324 x 4 BODYSONIC (R)
6. Software Used
   NUS ART CREATION (C)
   ODYSSEY STUDIO tm
   Composer: T. FUJIHARA

**(3) Data Measured in Brewing Process**

<u>Changes in sugar content</u>

| Year | 1989 | | | | | |
|------|------|------|------|------|------|------|
| Date | Oct. 31 | Nov. 2 | Nov. 4 | Nov. 6 | Nov. 7 | Nov. 10 |
| Vibrated | 21.5 | 21.0 | 15.8 | 12.6 | 11.0 | 7.8 |
| Not Vibrated | 21.5 | 21.0 | 16.2 | 13.0 | 11.6 | 8.4 |

<u>Changes in temperature</u> ($_o$C)

| Year | 1989 | | | | | |
|------|------|------|------|------|------|------|
| Date | Oct. 31 | Nov. 2 | Nov. 4 | Nov. 6 | Nov. 7 | Nov. 10 |
| Vibrated | 14.0 | 16.0 | 19.0 | 18.5 | 19.0 | 18.0 |
| Not Vibrated | 14.0 | 15.5 | 18.0 | 17.5 | 18.5 | 18.0 |
| Room Temperature | 14.0 | 15.0 | 15.0 | 15.0 | 17.0 | 16.0 |

| Specific Gravity, Degree of Sweetness (Ext), Size of Water Molecules, and Related Factors | | | | | |
|---|---|---|---|---|---|
| | Specific gravity | Ext. | Alcohol | Fermentation time | Water molecule size |
| Vibrated | 0.997 | 3.43 | 12.56 | 10 days | 87.56 Hz |
| Not Vibrated | 1.002 | 4.48 | 11.56 | 12 days | 92.06 Hz |

For the measurement of the molecule size, Model JNM-EX270 by Nippon Denshi has been used at the measuring temperature of 20 $_o$C.

**(4) Evaluation**

In light of the measured data obtained through the experiment, it is considered that the mechanism of the effect of musical vibrations as applied to the brewing of wine is as described below.

As the cluster of water molecules is made smaller by the effect of the musical vibrations, the movement of the water molecules becomes more vigorous, and the water molecules are put into their activated state. As the air which has entered into the space among the water molecules is reduced when the density of the water is intensified, the activities of anaerobic yeast became more active, thereby achieving a reduction of the fermentation period.

Moreover, the effect of pseudo-maturation achieved with the vibrations and a reduction of the cluster of water molecules have produced improvements on the taste of the wine under the experiment.

As described above, the present invention offers a method of improving the quality of liquid foods, wherein the method is characterized by working with electro-mechanical vibration transducers installed on a container filled with liquid foods or working on a container containing a liquid food as placed on a shelf or a mount base provided with electro-mechanical vibration transducers and conducting a low frequency current to the above-mentioned electro-mechanical vibration transducers in the state described above, also a method of improving the quality of a liquid food, wherein the method is characterized by working with electro-mechanical vibration transducers mounted on the outer wall of a tank which is to be used in the process of brewing a brewed food in its liquid state and conducting a low frequency current to the above-mentioned electro-mechanical vibration transducers in the process of brewing the brewed food mentioned above, and a method of improving the quality of a liquid food, wherein the method is characterized by setting up a shelf or a mount base on which a container filled up with liquid food manufactured by brewing is to be placed, providing electro-mechanical vibration transducers in some parts of the above-mentioned shelf or mount base, and conducting a low frequency current to the above-mentioned electro-mechanical vibration transducers in the state where the above-mentioned container is placed on the above-mentioned shelf or mount base.

Being constructed in this manner, the present invention is capable of first activating the molecular activities of water by the action of the electro-mechanical vibration transducers when they are put into action. As the molecules of water are made smaller when the molecular activities are thus activated, then the air which has entered into the space among the molecules of water is reduced, so that the taste of the water itself is improved. Moreover, the fermentation period is reduced as the activities of the anaerobic yeasts become more vigorous, and, with the synergistic effect of the simultaneous reduction of the water molecules, the taste of a liquor (or such a food as soy sauce) will be improved remarkably. Unlike the case in which a ultrasonic wave or another mechanical construction is employed as a means of giving vibrations is liable to a trouble or an inconvenience in consequence of its inability to make any change in frequency or in amplitude, the method according to the present invention is capable of making arbitrary changes in frequency and in amplitude and therefore giving the particular food the vibrations most suitable for it.

Furthermore, the use of musical signals as the vibration signals will furnish the so-called story nature to the improved taste of water or a liquor or the like. That is to say, when musical signals are thus used as signal sources, then the water or the liquor the taste of which is improved by these vibrations attains the improved quality under the influence of music, so that the course of progress will offer such features as can be effectively rendered in a story. Therefore, in the case of the liquid food which is wine as described in one of the examples of preferred embodiments, it will be a fair statement to say that the wine is "a special wine brewed by allowing it to listen to music". Thus, it is possible to emphasize a romantic story feature with regard to the wine.

In the recent times, attempts have been made at allowing bread or wine to listen to music in the process of fermentation or brewing. However, the present invention does not give such vibrations to such foods through the medium of air, but can exert vibrations directly to the foods. Thus, the method according to the present invention can attain its effect with extremely high efficiency.

**Claims**

1. A method of improving the quality of water or a liquid brewed food and/or promoting the brewing of a liquid brewed food, by vibrating a container containing said water or liquid brewed food with vibrations in the acoustic range, thereby vibrating the water or the liquid brewed food which is the content of such a container, and characterised by the step of varying the amplitude and frequency of the signals with time.

2. A method according to claim 1, wherein the vibrations are generated with electro-mechanical vibration transducers.

3. A method according to claim 2, wherein the electro-mechanical vibration transducers defined above are installed on the outer wall of the container.

4. A method according to either claim 1 or claim 2, wherein the container is placed on a shelf or a mount base and the electro-mechanical vibration transducers are installed on the said shelf or mount base.

5. A method according to any one of the preceding claims, wherein the container is a fermentation tank.

6. A method according to any one of claims 1 to 4, wherein the container is a water feeding tank for a building.

7. A method according to any one of claims 1 to 5, wherein the liquid brewed food is wine.

8. A method according to any one of the preceding claims wherein the signals are musical.

**Patentansprüche**

1. Verfahren zur Verbesserung der Qualität von Wasser oder einem flüssigen gebrauten Nahrungsmittel und/oder zur Förderung des Brauens eines flüssigen gebrauten Nahrungsmittels durch Vibrieren eines Behälters, der das Wasser oder das flüssige gebraute Nahrungsmittel enthält, mit Schwingungen im akustischen Bereich, wobei das Wasser oder das flüssige gebraute Nahrungsmittel, das den Inhalt eines solchen Behälters darstellt, in Schwingungen versetzt wird, **gekennzeichnet durch** den Schritt, daß die Amplitude und Frequenz der Signale mit der Zeit verändert werden.

2. Verfahren nach Anspruch 1, wobei die Schwingungen mit elektromechanischen Schwingungsumformern erzeugt werden.

3. Verfahren nach Anspruch 2, wobei die oben definierten elektromechanischen Schwingungsumformer an der Außenwand des Behälters angebracht sind.

4. Verfahren nach Anspruch 1 oder 2, wobei der Behälter auf einem Regal oder einer Gestellbasis plaziert ist und die elektromechanischen Schwingungsumformer an diesem Regal oder dieser Gestellbasis angebracht sind.

5. Verfahren nach einem der vorangehenden Ansprüche, wobei der Behälter ein Gärungstank ist.

6. Verfahren nach einem der Ansprüche 1 bis 4, wobei der Behälter ein Wasserspeisetank für ein Gebäude ist.

7. Verfahren nach einem der Ansprüche 1 bis 5, wobei das flüssige gebraute Nahrungsmittel Wein ist.

8. Verfahren nach einem der vorangehenden Ansprüche, wobei die Signale musikalisch sind.

**Revendications**

1. Procédé pour améliorer la qualité de l'eau ou d'un aliment brassé liquide et/ou promouvoir le brassage d'un aliment brassé liquide, en faisant vibrer un conteneur renfermant lesdits eau ou aliment brassé liquide avec des vibrations dans la gamme acoustique, d'où la mise en vibrations de l'eau ou de l'aliment brassé liquide qui forment le contenu d'un tel conteneur, et caractérisé par l'étape consistant à faire varier l'amplitude et la fréquence des signaux dans le temps.

2. Procédé selon la revendication 1, dans lequel les vibrations sont produites par des transducteurs électromécaniques de vibrations.

3. Procédé selon la revendication 2, dans lequel les transducteurs électromécaniques de vibrations définis ci-dessus sont installés sur la paroi extérieure du conteneur.

4. Procédé selon la revendication 1 ou la revendication 2, dans lequel le conteneur est placé sur une étagère ou une base de montage et les transducteurs électromécaniques de vibrations sont montés sur lesdites étagère ou base de montage.

5. Procédé selon l'une quelconque des revendications précédentes, dans lequel le conteneur est une cuve de fermentation.

6. Procédé selon l'une quelconque des revendications 1 à 4, dans lequel le conteneur est une cuve d'alimentation en eau pour bâtiment.

7. Procédé selon l'une quelconque des revendications 1 à 5, dans lequel l'aliment brassé liquide est du vin.

8. Procédé selon l'une quelconque des revendications précédentes, dans lequel les signaux sont musi-caux.

F I G . 1

F I G . 3

F I G . 2

F I G . 4

F I G . 5

FIG.6

FIG.7

FIG.8

FIG.9